# EUROPÄISCHE PATENTSCHRIFT

(11) **EP 3 724 017 B1**
(45) Veröffentlichungstag und Bekanntmachung des Hinweises auf die Patenterteilung: **10.01.2024**
(21) Anmeldenummer: 18819000.3
(22) Anmeldetag: 29.11.2018
(51) Int. Cl.: B60K 6/48, B60K 6/36, B60K 6/383, B60K 6/387, B60K 6/547, B60K 6/54, B60W 10/02, B60W 10/08, B60W 10/11, B60W 20/30, B60W 20/40, B60W 20/15, B60W 30/18, B60W 50/08, F16H 3/10

(54) **VERFAHREN ZUR STEUERUNG EINES ANTRIEBSSTRANGS EINES HYBRIDFAHRZEUGS**
CONTROL METHOD FOR HYBRID DRIVETRAIN
PROCÉDÉ DE CONTRÔLE D'UNE CHAÎNE DE TRACTION HYBRIDE

(30) Priorität: 12.12.2017 DE 102017222535
(43) Veröffentlichungstag der Anmeldung: 21.10.2020
(73) Patentinhaber: VOLKSWAGEN AKTIENGESELLSCHAFT, 38440 Wolfsburg (DE)
(72) Erfinder: SCHAEFER, Stephan, 38458 Velpke (DE)
(86) Internationale Anmeldenummer: PCT/EP2018/083053
(87) Internationale Veröffentlichungsnummer: WO 2019/115247

(56) Entgegenhaltungen:
- EP-A2- 2 696 104
- EP-A2- 2 886 383
- US-A- 5 655 990

## Beschreibung

Die Erfindung betrifft ein Verfahren zur Steuerung eines Antriebsstrangs eines Hybridfahrzeugs mit den Merkmalen des Patentanspruchs 1.

Bei Hybridfahrzeugen weist der Antriebsstrang eine Verbrennungskraftmaschine und eine Elektromaschine auf. Darüber hinaus kann der Antriebsstrang von Hybridfahrzeugen ein Getriebe aufweisen.

Aus der EP 2 931 546 B1 ist ein Verfahren zur Steuerung eines Antriebsstrangs bekannt, welcher eine Verbrennungskraftmaschine, eine motorisch und generatorisch betreibbare Elektromaschine und ein Automatikgetriebe umfasst.

In der US 5 655 990 A ist ein Verfahren zur Steuerung eines Antriebsstrangs eines Elektrofahrzeugs gezeigt. Der Antriebsstrang weist eine Elektromaschine und ein Getriebe auf, wobei das Getriebe einen ersten, freilaufgeschalteten, lediglich zugmomentenübertragenden, niedrigen Vorwärtsgang aufweist, und wobei das Getriebe einen zweiten und einen dritten, jeweils freilauffreien, höheren Vorwärtsgang aufweist. Der erste Vorwärtsgang weist dazu eine Freilaufkupplung und der zweite und dritte Vorwärtsgang weisen dazu jeweils eine Schaltkupplung auf. In einem Schubbetrieb des Elektrofahrzeugs ist mittels der Elektromaschine und mittels des zweiten oder dritten Vorwärtsganges Energie rekuperierbar. Mittels des ersten, freilaufgeschalteten, lediglich zugmomentenübertragenden, niedrigen Vorwärtsgang ist keine Energie rekuperierbar. Durch den ersten Vorwärtsgang wird somit kein Bremsmoment erzeugt.

Die EP 2 696 104 A2 offenbart ein Verfahren zur Steuerung eines Antriebsstrangs eines Kraftfahrzeugs. Der Antriebsstrang weist eine Elektromaschine oder einen Verbrennungsmotor und ein Getriebe auf, wobei das Getriebe einen ersten, freilaufgeschalteten, lediglich zugmomentenübertragenden, niedrigen Vorwärtsgang aufweist, und wobei das Getriebe einen zweiten, freilauffreien, höheren Vorwärtsgang aufweist. Der erste Vorwärtsgang weist dazu eine Freilaufkupplung und der zweite Vorwärtsgang weist dazu eine Lastschaltkupplung auf. Das Kraftfahrzeug ist mittels des zweiten Vorwärtsgangs in einem Schubbetrieb betreibbar. Mittels des ersten, freilaufgeschalteten, lediglich zugmomentenübertragenden, niedrigen Vorwärtsgang ist kein Schubbetrieb möglich, es sei denn die Freilaufkupplung wird mittels einer optionalen Überbrückungskupplung überbrückt.

Die EP 2 886 383 A2 zeigt einen Antriebsstrang eines Hybridfahrzeuges mit einer Verbrennungskraftmaschine, einer motorisch und generatorisch betreibbaren Elektromaschine und mit einem Doppelkupplungsgetriebe. Das Doppelkupplungsgetriebe weist drei oder vier Vorwärtsgangstufen auf. Ein Losrad einer ersten Vorwärtsgangstufe ist über einen Freilauf mit einer zugehörigen, ersten Ausgangswelle gekoppelt, so dass es hier nicht notwendig ist, eine Schaltkupplung für die erste Vorwärtsgangstufe vorzusehen.

Die im Stand der Technik bekannten Verfahren zur Steuerung von Antriebssträngen von Hybridfahrzeugen sind jedoch noch nicht optimal ausgebildet. Zudem sind Verfahren zur Steuerung von Antriebssträngen meist stark von der Konfiguration des Antriebsstrangs, beispielsweise von der Anordnung der Verbrennungskraftmaschine, der Elektromaschine und des Getriebes zueinander sowie von deren Ausgestaltung abhängig und können in der Regel nicht auf andersartig konfigurierte Antriebsstränge übertragen werden. Darüber hinaus sind im Stand der Technik bekannte Antriebsstränge meist komplex, kostspielig und/oder bauraumeinnehmend.

Der Erfindung liegt daher die Aufgabe zu Grunde, die eingangs genannten Verfahren zur Steuerung eines Antriebsstrangs eines Hybridfahrzeugs, derart auszugestalten und weiterzubilden, dass der Antriebsstrang einfach, effizient, kostengünstig und/oder bauraumsparend produziert und betrieben werden kann.

Die der Erfindung zugrunde liegende Aufgabe wird durch ein Verfahren zur Steuerung eines Antriebsstrangs eines Hybridfahrzeugs mit den Merkmalen des Patentanspruchs 1 gelöst. Dabei umfasst der Antriebsstrang eine Verbrennungskraftmaschine, eine motorisch und generatorisch betreibbare Elektromaschine und ein Getriebe. Dabei ist im Schubbetrieb des Fahrzeugs Energie durch einen generatorischen Betrieb der Elektromaschine rekuperierbar.

Das Getriebe umfasst dabei mindestens einen freilaufgeschalteten, lediglich zugmomentübertragenden, niedrigen Vorwärtsgang und mindestens einen freilauffreien, höheren Vorwärtsgang. Insbesondere kann der freilaufgeschaltete, niedrige Vorwärtsgang der erster Vorwärtsgang und der freilauffreie, höhere Vorwärtsgang der zweite Vorwärtsgang des Getriebes sein.

Das Getriebe kann insbesondere ein Automatikgetriebe, beispielsweise ein automatisches und/oder automatisiertes Getriebe, sein. Beispielsweise kann das Getriebe ein als automatisiertes Handschaltgetriebe ausgeführtes Getriebe sein, bei dem insbesondere Gangwechsel durch einen Tippmodus manuell vom Fahrer des Fahrzeugs betätigbar bzw. realisierbar sind. Dabei kann unter einem als automatisiertes Handschaltgetriebe ausgeführten Getriebe insbesondere ein Getriebe mit einer automatisierten Kupplung verstanden werden, welches insbesondere durch eine manuelle Betätigung, insbesondere einen "Tippmodus" im Fahrgastraum betätigbar bzw. steuerbar ist (ohne dass im Fahrgastraum ein Kupplungspedal betätigt werden und/oder vorhanden sein muss). Unter einem durch einen Tippmodus betätigbaren Getriebe kann insbesondere ein Getriebe verstanden werden, bei dem ein serieller Gangwechsel, zum Beispiel vom ersten zum zweiten Vorwärtsgang und/oder vom zweiten zum dritten Vorwärtsgang, durch manuelles Antippen eines Betätigungselementes vom Fahrer des Fahrzeugs betätigbar ist.

In dem Verfahren wird
- wenn der freilaufgeschaltete, niedrige, insbesondere erste, Vorwärtsgang eingelegt ist und das Fahrzeug in den Schubbetrieb übergeht, oder,
- wenn der Fahrer des Fahrzeugs einen Übergang des Fahrzeugs in den Schubbetrieb durch Auswahl des freilaufgeschalteten, niedrigen, insbesondere ersten, Vorwärtsgangs anfordert, über den freilauffreien, höheren, insbesondere zweiten, Vorwärtsgang durch einen generatorischen Betrieb der Elektromaschine zur Rekuperation von Energie ein Schubmoment eingestellt, welches einem Schubmoment einer freilauffreien Ausgestaltung des freilaufgeschalteten, niedrigen, insbesondere ersten, Vorwärtsgangs, im Wesentlichen, entspricht.

Dabei wird unter "im Wesentlichen" verstanden, dass das eingestellte Schubmoment in einem Bereich von ≥ 90 % bis ≤ 110 % des Schubmoments einer freilauffreien Ausgestaltung des freilaufgeschalteten, niedrigen, insbesondere ersten, Vorwärtsgangs liegt.

Durch die Verwendung eines lediglich zugmomentübertragenden Freilaufs, insbesondere in der Funktion einer Überholkupplung, als Schaltelement eines niedrigeren Vorwärtsgangs, zum Beispiel des ersten Vorwärtsgangs, kann das Getriebe und damit der Antriebsstrang einfacher, kostengünstiger und/oder bauraumsparender produziert und damit dessen Produktion optimiert werden. Zum Beispiel können durch die Verwendung eines lediglich zugmomentübertragenden Freilaufs für die Schaltung eines damit ausgestatteten Ganges eine Gangstelleraktuatorik, beispielsweise eine Schiebemuffe, eine Schaltgabel (1/N), ein Ventil, ein Kolben, ein Wegsensor und/oder eine Gehäusebohrung, eingespart werden.

Durch einen freilaufgeschalteten, lediglich zugmomentübertragenden Vorwärtsgang kann jedoch kein Schub übertragen werden. Zum Einen kann daher der freilaufgeschaltete, niedrige, beispielsweise erste, Vorwärtsgang nicht zum generatorischen Betrieb der Elektromaschine und damit insbesondere nicht zur Rekuperation von Energie durch die Elektromaschine genutzt werden. Zum Anderen kann in dem freilaufgeschalteten, niedrigen, beispielsweise ersten, Vorwärtsgang im Schubbetrieb des Fahrzeugs - im Gegensatz zu herkömmlichen Fahrzeugen - kein bremsender Effekt (Motorbremse) auftreten, was gegebenenfalls den Fahrer des Fahrzeug irritieren könnte.

Dadurch, dass über den freilauffreien, höheren, beispielsweise zweiten, Vorwärtsgang durch einen generatorischen Betrieb der Elektromaschine zur Rekuperation von Energie ein Schubmoment eingestellt wird, welches einem Schubmoment einer freilauffreien Ausgestaltung des freilaufgeschalteten, niedrigen Vorwärtsgangs, im Wesentlichen, entspricht, kann nicht nur Energie rekuperiert, sondern auch dem Fahrer ein zu herkömmlichen Fahrzeugen ähnlicher Fahreindruck, nämlich das Gefühl, dass der gewählte, niedrige, beispielsweise erste, Vorwärtsgang weiterhin eingelegt ist und einen bremsenden Effekt (ähnlich der herkömmlichen Motorbremse) entfaltet, vermittelt und dadurch eine Irritation des Fahrers vermieden werden.

Bei einer Ausführung des Getriebes als automatisiertes, insbesondere durch einen Tippmodus betätigbares, Handschaltgetriebe ist das Verfahren von besonderem Vorteil, da hierbei ein Schubbetrieb des Fahrzeugs im freilaufgeschalteten, niedrigen, beispielsweise ersten, Vorwärtsgang nicht nur dann auftreten kann, wenn der Fahrer bei einer Fahrt im freilaufgeschalteten, niedrigen, beispielsweise ersten, Vorwärtsgang vom Gas geht, sondern auch wenn der Fahrer einen Übergang des Fahrzeugs in den Schubbetrieb durch Auswahl des freilaufgeschalteten, niedrigen, beispielsweise ersten, Vorwärtsgangs, ausgehend von einem freilauffreien, höheren, beispielsweise zweiten, Vorwärtsgang, anfordert. Da hierbei der Fahrer mit einem bremsenden Effekt entsprechend des gewählten niedrigen, beispielsweise ersten, Vorwärtsgangs rechnet und bei einem Nicht-Eintreten dieses Effektes irritiert sein könnte, ist hierbei die Vermittlung eines zu einem herkömmlichen Fahrzeug ähnlichen Fahreindrucks, nämlich des Gefühls, dass der gewählte, niedrige, beispielsweise erste, Vorwärtsgang eingelegt bleibt oder wird und einen bremsenden Effekt (ähnlich der herkömmlichen Motorbremse) entfaltet, von besonderem Interesse.

In einer weiteren Ausgestaltung wird, wenn über den freilauffreien, höheren, insbesondere zweiten, Vorwärtsgang durch einen generatorischen Betrieb der Elektromaschine zur Rekuperation von Energie ein Schubmoment eingestellt wird, welches einem Schubmoment einer freilauffreien Ausgestaltung des freilaufgeschalteten, niedrigen, insbesondere ersten, Vorwärtsgangs, im Wesentlichen, entspricht, der freilaufgeschaltete, niedrige, insbesondere erste, Vorwärtsgang als Sollgang angezeigt. So kann eine Irritierung des Fahrers durch einen Anzeigewechsel vermieden werden.

In einer weiteren Ausgestaltung wird wenn das Fahrzeug. beispielsweise durch Fahrpedalgabe des Fahrers, vom Schubbetrieb wieder in einen Zugbetrieb wechselt, von dem freilauffreien, höheren, insbesondere zweiten, Vorwärtsgang in den freilaufgeschalteten, niedrigen, insbesondere ersten, Vorwärtsgang geschaltet. Insofern dies im elektromotorischen Betrieb des Hybridfahrzeugs erfolgt, ist dieser Gangwechsel vom Fahrer kaum bemerkbar und irritiert den Fahrer folglich auch nicht.

Erfindungsgemäß weist der Antriebsstrang zwischen der Verbrennungskraftmaschine und der Elektromaschine eine Kupplung, beispielsweise eine so genannte K0-Kupplung, auf.

Erfindungsgemäß wird im verbrennungsmaschinellen Betrieb des Fahrzeugs die Verbrennungskraftmaschine beim Einstellen des Schubmoments über den freilauffreien, höheren, insbesondere zweiten, Vorwärtsgang durch den generatorischen Betrieb der Elektromaschine zur Rekuperation von Energie weiter betrieben und durch Öffnen der Kupplung abgekuppelt und kann beim Wechsel des Fahrzeugs vom Schubbetrieb in den Zugbetrieb wieder durch Schließen der Kupplung angekuppelt werden. So kann eine hohe Fahrzeugdynamik dargestellt werden.

Erfindungsgemäß wird dabei die Drehzahl der Verbrennungskraftmaschine auf einer dem freilaufgeschalteten, niedrigen Vorwärtsgang entsprechende Drehzahl gehalten und/oder eingestellt. So kann vermieden werden, dass der Fahrer durch eine Änderung der Drehzahl verwirrt wird.

Das Getriebe kann insbesondere als ein automatisches bzw. automatisiertes Doppelkupplungsgetriebe ausgebildet sein. Beispielsweise kann das Getriebe ein Doppelkupplungsgetriebe mit einem über eine erste Getriebekupplung koppelbaren ersten Teilgetriebe und einem über eine zweite Getriebekupplung koppelbaren zweiten Teilgetriebe sein. Dabei kann insbesondere der freilaufgeschaltete, lediglich zugmomentübertragende, niedrige, insbesondere erste, Vorwärtsgang dem ersten Teilgetriebe zugeordnet sein und/oder über die erste Getriebekupplung gekuppelt werden. Der freilauffreie, höhere, insbesondere zweite, Vorwärtsgang kann dabei insbesondere dem zweiten Teilgetriebe zugeordnet sein und/oder über die zweite Getriebekupplung gekuppelt werden.

In einer weiteren Ausgestaltung wird, wenn der freilaufgeschaltete, niedrige, insbesondere erste, Vorwärtsgang gewählt und/oder geschaltet wird, zusätzlich zum freilaufgeschalteten, niedrigen, insbesondere ersten, Vorwärtsgang der freilauffreie, höhere, insbesondere zweite, Vorwärtsgang voreingelegt. Dies kann insbesondere bei einer Ausführung des Getriebes als Doppelkupplungsgetriebe realisiert werden. So können Schaltgeräusche minimiert und eine Irritierung des Fahrers vermieden werden.

Die eingangs genannten Nachteile sind daher vermieden und entsprechende Vorteile sind erzielt.

Es gibt nun eine Vielzahl von Möglichkeiten, das erfindungsgemäße Verfahren zur Steuerung eines Antriebsstrangs eines Hybridfahrzeugs in vorteilhafter Art und Weise auszugestalten und weiterzubilden. Hierfür darf zunächst auf die dem Patentanspruch 1 nachgeordneten

Patentansprüche verwiesen werden. Im Folgenden werden einige bevorzugte Ausgestaltungen des erfindungsgemäßen Verfahrens zur Steuerung eines Antriebsstrangs eines Hybridfahrzeugs anhand der Zeichnung und der dazugehörigen Beschreibung näher erläutert. In der Zeichnung zeigt:

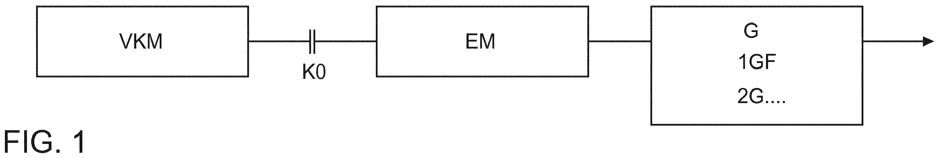

- Fig. 1: in einer schematischen Darstellung eine Ausgestaltung eines Antriebsstrangs für ein Hybridfahrzeug, welcher durch ein erfindungsgemäßes Verfahren steuerbar ist.

Fig. 1 zeigt, dass der Antriebsstrang für ein Hybridfahrzeug eine Verbrennungskraftmaschine VKM, ein Getriebe G und eine Elektromaschine EM umfasst. Dabei ist im Schubbetrieb des Fahrzeugs Energie durch einen generatorischen Betrieb der Elektromaschine EM rekuperierbar. Die Elektromaschine EM ist in der gezeigten Ausgestaltung zwischen der Verbrennungskraftmaschine VKM und dem Getriebe G angeordnet. Das Getriebe G weist zumindest einen freilaufgeschalteten, lediglich zugmomentübertragenden, niedrigen Vorwärtsgang 1GF und einen freilauffreien, höheren Vorwärtsgang 2G auf. Der freilaufgeschaltete, lediglich zugmomentübertragende, niedrige Vorwärtsgang 1GF kann dabei insbesondere der erste Vorwärtsgang des Getriebes G und der freilauffreie, höhere Vorwärtsgang 2G der zweite Vorwärtsgang des Getriebes G sein. Das Getriebe G kann beispielsweise ein als automatisiertes Handschaltgetriebe ausgeführtes Getriebe ausgebildet sein, insbesondere wobei Gangwechsel durch einen Tippmodus manuell vom Fahrer des Fahrzeugs betätigbar bzw. realisierbar sind. Insbesondere weist das Getriebe G eine Mehrzahl von Vorwärtsgängen, beispielsweise fünf oder sechs Vorwärtsgänge auf, insbesondere kann das Getriebe als ein Doppelkupplungsgetriebe ausgebildet sein.

Ein derartiger Antriebsstrang kann durch das erfindungsgemäße Verfahren derart gesteuert werden, dass wenn der freilaufgeschaltete, niedrige Vorwärtsgang 1GF eingelegt ist und das Fahrzeug in den Schubbetrieb übergeht oder wenn der Fahrer des Fahrzeugs einen Übergang des Fahrzeugs in den Schubbetrieb durch Auswahl des freilaufgeschalteten, niedrigen Vorwärtsgangs 1GF anfordert, über den freilauffreien, höheren Vorwärtsgang 2G durch einen generatorischen Betrieb der Elektromaschine EM zur Rekuperation von Energie ein Schubmoment eingestellt wird, welches einem Schubmoment einer freilauffreien Ausgestaltung des freilaufgeschalteten, niedrigen Vorwärtsgangs 1GF im Wesentlichen entspricht. Wenn das Fahrzeug vom Schubbetrieb wieder in einen Zugbetrieb wechselt, kann dabei von dem freilauffreien, höheren Gang Vorwärtsgang 2G in den freilaufgeschalteten, niedrigen Vorwärtsgang 1GF geschaltet werden.

Fig. 1 zeigt, dass der Antriebsstrang erfindungsfemäß zwischen der Verbrennungskraftmaschine VKM und der Elektromaschine EM eine Kupplung K0, insbesondere eine so genannte K0-Kupplung, aufweist. Im verbrennungsmaschinellen Betrieb des Fahrzeugs wird erfindungsgemäß die Verbrennungskraftmaschine VKM beim Einstellen des Schubmoments über den freilauffreien, höheren Vorwärtsgang 2G durch den generatorischen Betrieb der Elektromaschine EM zur Rekuperation von Energie durch Öffnen der Kupplung K0 abgekuppelt und weiter betrieben, und kann beim Wechsel des Fahrzeugs vom Schubbetrieb in den Zugbetrieb wieder durch Schließen der Kupplung K0 angekuppelt werden. Dabei wird die Drehzahl der Verbrennungskraftmaschine VKM beim Einstellen des Schubmoments über den freilauffreien, höheren Vorwärtsgang 2G durch den generatorischen Betrieb der Elektromaschine EM zur Rekuperation von Energie auf einer dem freilaufgeschalteten, niedrigen Vorwärtsgang 1GF entsprechende Drehzahl gehalten und/oder eingestellt.

### Bezugszeichenliste

- VKM: Verbrennungskraftmaschine
- G: Getriebe
- EM: Elektromaschine
- K0: K0-Kupplung

- 1GF: freilaufgeschalteter, lediglich zugmomentübertragender, niedriger, insbesondere erster, Vorwärtsgang
- 2G: freilauffreier, höherer, insbesondere zweiter, Vorwärtsgang

## Patentansprüche

1. Verfahren zur Steuerung eines Antriebsstrangs eines Hybridfahrzeugs mit einer Verbrennungskraftmaschine (VKM), mit einer motorisch und generatorisch betreibbaren Elektromaschine (EM) und mit einem Getriebe (G), wobei im Schubbetrieb des Fahrzeugs durch einen generatorischen Betrieb der Elektromaschine (EM) Energie rekuperierbar ist, wobei das Getriebe (G) einen freilaufgeschalteten, lediglich zugmomentübertragenden, niedrigen Vorwärtsgang (1GF) und mindestens einen freilauffreien, höheren Vorwärtsgang (2G) umfasst, wobei
- wenn der freilaufgeschaltete, niedrige Vorwärtsgang (1GF) eingelegt ist und das Fahrzeug in den Schubbetrieb übergeht, oder
- wenn der Fahrer des Fahrzeugs einen Übergang des Fahrzeugs in den Schubbetrieb durch Auswahl des freilaufgeschalteten, niedrigen Vorwärtsgangs (1GF) anfordert,
über den freilauffreien, höheren Vorwärtsgang (2G) durch einen generatorischen Betrieb der Elektromaschine (EM) zur Rekuperation von Energie ein Schubmoment eingestellt wird, welches einem Schubmoment einer freilauffreien Ausgestaltung des freilaufgeschalteten, niedrigen Vorwärtsgangs (1GF) im Wesentlichen entspricht, **dadurch gekennzeichnet, dass** der Antriebsstrang zwischen der Verbrennungskraftmaschine (VKM) und der Elektromaschine (EM) eine Kupplung (K0) aufweist, wobei im verbrennungsmaschinellen Betrieb des Fahrzeugs die Verbrennungskraftmaschine (VKM) beim Einstellen des Schubmoments über den freilauffreien, höheren Vorwärtsgang (2G) durch den generatorischen Betrieb der Elektromaschine (EM) zur Rekuperation von Energie weiter betrieben wird, aber durch Öffnen der Kupplung (K0) abgekuppelt wird, und die Drehzahl der Verbrennungskraftmaschine (VKM) auf einer dem freilaufgeschalteten, niedrigen Vorwärtsgang (1GF) entsprechende Drehzahl gehalten und/oder eingestellt wird.

2. Verfahren nach Anspruch 1, **dadurch gekennzeichnet, dass** der freilaufgeschaltete niedrige Vorwärtsgang (1GF) der erster Vorwärtsgang (1GF) und der freilauffreie höhere Vorwärtsgang (2G) der zweite Vorwärtsgang (2G) des Getriebes (G) ist.

3. Verfahren nach einem der vorstehenden Ansprüche, **dadurch gekennzeichnet, dass** wenn das Fahrzeug in dem freilaufgeschalteten, niedrigen Vorwärtsgang (1GF) in den Schubbetrieb übergeht, in den freilauffreien, höheren Vorwärtsgang (2G) geschaltet wird und über den freilauffreien, höheren Vorwärtsgang (2G) durch einen generatorischen Betrieb der Elektromaschine (EM) zur Rekuperation von Energie ein Schubmoment eingestellt wird, welches einem Schubmoment einer freilauffreien Ausgestaltung des freilaufgeschalteten, niedrigen Vorwärtsgangs (1GF) im Wesentlichen entspricht, und/oder wenn der Fahrer des Fahrzeugs einen Übergang des Fahrzeugs in den Schubbetrieb durch Auswahl des freilaufgeschalteten, niedrigen Vorwärtsgangs (1GF) anfordert, der freilauffreie, höhere Vorwärtsgang (2G) beibehalten wird und über den freilauffreien, höheren Vorwärtsgang (2G) durch einen generatorischen Betrieb der Elektromaschine (EM) zur Rekuperation von Energie ein Schubmoment eingestellt wird, welches einem Schubmoment einer freilauffreien Ausgestaltung des freilaufgeschalteten, niedrigen Vorwärtsgangs (1GF) im Wesentlichen entspricht.

4. Verfahren nach einem der vorstehenden Ansprüche, **dadurch gekennzeichnet, dass** wenn über den freilauffreien, höheren Vorwärtsgang (2G) durch einen generatorischen Betrieb der Elektromaschine (EM) zur Rekuperation von Energie ein Schubmoment eingestellt wird, welches einem Schubmoment einer freilauffreien Ausgestaltung des freilaufgeschalteten, niedrigen Vorwärtsgangs (1GF) im Wesentlichen entspricht, der freilaufgeschaltete, niedrige Vorwärtsgang (1GF) als Sollgang angezeigt wird.

5. Verfahren nach einem der vorstehenden Ansprüche, **dadurch gekennzeichnet, dass** wenn das Fahrzeug vom Schubbetrieb wieder in einen Zugbetrieb wechselt, von dem freilauffreien, höheren Gang Vorwärtsgang (2G) in den freilaufgeschalteten, niedrigen Vorwärtsgang (1GF) geschaltet wird.

6. Verfahren nach einem der vorstehenden Ansprüche, **dadurch gekennzeichnet, dass** im verbrennungsmaschinellen Betrieb des Fahrzeugs die Verbrennungskraftmaschine (VKM) beim Einstellen des Schubmoments über den freilauffreien, höheren Vorwärtsgang (2G) durch den generatorischen Betrieb der Elektromaschine (EM) zur Rekuperation von Energie beim Wechsel des Fahrzeugs vom Schubbetrieb in den Zugbetrieb wieder durch Schließen der Kupplung (K0) angekuppelt wird.

7. Verfahren nach einem der vorstehenden Ansprüche 1 bis 6, **dadurch gekennzeichnet, dass** das Getriebe (G) ein als automatisiertes Handschaltgetriebe ausgeführtes Doppelkupplungsgetriebe ist, wobei insbesondere die Gangwechsel durch einen Tippmodus manuell vom Fahrer des Fahrzeugs betätigbar und/oder realisierbar sind.

8. Verfahren nach Anspruch 7, **dadurch gekennzeichnet, dass** wenn der freilaufgeschaltete, niedrige Vorwärtsgang (1GF) gewählt und/oder geschaltet wird, zusätzlich zum freilaufgeschalteten, niedrigen Vorwärtsgang (1GF) der freilauffreie, höhere Vorwärtsgang (2G) voreingelegt wird.

## Claims

1. Method for controlling a drive train of a hybrid vehicle having an internal combustion engine (VKM), an electric motor (EM) that can be operated as a motor and as a generator, and a transmission (G), wherein energy can be recovered when the vehicle is in overrun operation by the electric motor (EM) operating as a generator, wherein the transmission (G) comprises a freewheel-connected low forward gear (1GF) that only transmits traction torque and at least one freewheel-free higher forward gear (2G), wherein
- when the freewheel-connected low forward gear (1GF) is engaged and the vehicle transitions into overrun operation, or
- when the driver of the vehicle requests a transition of the vehicle into overrun operation by selecting the freewheel-connected low forward gear (1GF),
an overrun torque is set via the freewheel-free higher forward gear (2G) by the electric motor (EM) operating as a generator in order to recover energy, which overrun torque corresponds substantially to an overrun torque of a freewheel-free embodiment of the freewheel-connected low forward gear (1GF), **characterized in that** the drive train has a clutch (K0) between the internal combustion engine (VKM) and the electric motor (EM), wherein when the vehicle is being operated by the internal combustion engine, said internal combustion engine (VKM) continues to operate during the setting of the overrun torque via the freewheel-free higher forward gear (2G) by the electric motor (EM) operating as a generator in order to recover energy, but is decoupled by opening the clutch (K0), and the speed of the internal combustion engine (VKM) is held and/or set to a speed corresponding to the freewheel-connected low forward gear (1GF).

2. Method according to Claim 1, **characterized in that** the freewheel-connected low forward gear (1GF) is the first forward gear (1GF) and the freewheel-free higher forward gear (2G) is the second forward gear (2G) of the transmission (G).

3. Method according to one of the preceding claims, **characterized in that** when the vehicle transitions into overrun operation in the freewheel-connected low forward gear (1GF), there is a shift into the freewheel-free higher forward gear (2G) and an overrun torque is set via the freewheel-free higher forward gear (2G) by the electric motor (EM) operating as a generator in order to recover energy, which overrun torque corresponds substantially to an overrun torque of a freewheel-free embodiment of the freewheel-connected low forward gear (1GF), and/or when the driver of the vehicle requests a transition of the vehicle into overrun operation by selecting the freewheel-connected low forward gear (1GF), the freewheel-free higher forward gear (2G) is retained and an overrun torque is set via the freewheel-free higher forward gear (2G) by the electric motor (EM) operating as a generator in order to recover energy, which overrun torque corresponds substantially to an overrun torque of a freewheel-free embodiment of the freewheel-connected low forward gear (1GF).

4. Method according to one of the preceding claims, **characterized in that** when an overrun torque is set via the freewheel-free higher forward gear (2G) by the electric motor (EM) operating as a generator in order to recover energy, which overrun torque corresponds substantially to an overrun torque of a freewheel-free embodiment of the freewheel-connected low forward gear (1GF), the freewheel-connected low forward gear (1GF) is displayed as the target gear.

5. Method according to one of the preceding claims, **characterized in that** when the vehicle changes from overrun operation back into traction operation there is a shift from the freewheel-free higher forward gear (2G) into the freewheel-connected low forward gear (1GF) .

6. Method according to one of the preceding claims, **characterized in that** when the vehicle is being operated by the internal combustion engine, said internal combustion engine (VKM) during the setting of the overrun torque via the freewheel-free higher forward gear (2G) by the electric motor (EM) operating as a generator in order to recover energy is coupled again when the vehicle changes from overrun operation to traction operation by closing the clutch (K0).

7. Method according to one of preceding Claims 1 to 6, **characterized in that** the transmission (G) is a dual-clutch transmission configured as an automated manual transmission, wherein the gear changes, in particular, can be actuated and/or performed manually by the driver of the vehicle through a one-touch mode.

8. Method according to Claim 7, **characterized in that** when the freewheel-connected low forward gear (1GF) is selected and/or shifted, in addition to the freewheel-connected low forward gear (1GF), the freewheel-free higher forward gear (2G) is engaged beforehand.

## Revendications

1. Procédé de commande d'une chaîne cinématique d'un véhicule hybride avec un moteur à combustion interne (VKM), avec un moteur électrique (EM) pouvant fonctionner de manière motorisée et génératrice et avec une boîte de vitesses (G), un fonctionnement générateur du moteur électrique (EM) permettant de récupérer de l'énergie lorsque le véhicule fonctionne en régime de décélération, la boîte de vitesses (G) comprenant un rapport de marche avant inférieur en roue libre (1GF), transmettant uniquement le couple de traction, et au moins un rapport de marche avant supérieur sans roue libre (2G),
- lorsque le rapport de marche avant inférieur en roue libre (1GF) est engagé et que le véhicule passe en régime de décélération, ou
- lorsque le conducteur du véhicule demande un passage du véhicule en régime de décélération en sélectionnant le rapport de marche avant inférieur en roue libre (1GF), un fonctionnement générateur du moteur électrique (EM) ajustant par l'intermédiaire du rapport de marche avant supérieur sans roue libre (2G) pour la récupération d'énergie un couple de décélération qui correspond essentiellement à un couple de décélération d'une configuration sans roue libre du rapport de marche avant inférieur en roue libre (1GF), **caractérisé en ce que** la chaîne cinématique présente un embrayage (K0) entre le moteur à combustion interne (VKM) et le moteur électrique (EM) ; lorsque le véhicule fonctionne en régime de moteur à combustion interne, le moteur à combustion interne (VKM) continuant de fonctionner lors de l'ajustement du couple de décélération par l'intermédiaire du rapport de marche avant supérieur sans roue libre (2G) par le fonctionnement générateur du moteur électrique (EM) pour la récupération d'énergie, mais étant désaccouplé par ouverture de l'embrayage (K0), et la vitesse de rotation du moteur à combustion interne (VKM) étant maintenue et/ou ajustée à une vitesse de rotation correspondant au rapport de marche avant inférieur en roue libre (1GF).

2. Procédé selon la revendication 1, **caractérisé en ce que** le rapport de marche avant inférieur en roue libre (1GF) est le premier rapport de marche avant (1GF) et le rapport de marche avant supérieur en roue libre (2G) est le deuxième rapport de marche avant (2G) de la boîte de vitesses (G).

3. Procédé selon l'une quelconque des revendications précédentes, **caractérisé en ce que,** lorsque le véhicule passe en régime de décélération dans le rapport de marche avant inférieur en roue libre (1GF), il est commuté dans le rapport de marche avant supérieur sans roue libre (2G) et, un fonctionnement générateur du moteur électrique (EM) ajuste par l'intermédiaire du rapport de marche avant supérieur sans roue libre (2G) pour la récupération d'énergie un couple de décélération qui correspond essentiellement à un couple de décélération d'une configuration sans roue libre du rapport de marche avant inférieur en roue libre (1GF), et/ou lorsque le conducteur du véhicule demande un passage du véhicule en régime de décélération en sélectionnant le rapport de marche avant inférieur en roue libre (1GF), le rapport de marche avant supérieur sans roue libre (2G) est maintenu et un fonctionnement générateur du moteur électrique (EM) ajuste par l'intermédiaire du rapport de marche avant supérieur sans roue libre (2G) pour la récupération d'énergie un couple de décélération qui correspond essentiellement à un couple de décélération d'une configuration sans roue libre du rapport de marche avant inférieur en roue libre (1GF).

4. Procédé selon l'une quelconque des revendications précédentes, **caractérisé en ce que,** lorsqu'un fonctionnement générateur du moteur électrique (EM) ajuste par l'intermédiaire du rapport de marche avant supérieur sans roue libre (2G) pour la récupération d'énergie un couple de décélération qui correspond essentiellement à un couple de décélération d'une configuration sans roue libre du rapport de marche avant inférieur en roue libre (1GF), le rapport de marche avant inférieur en roue libre (1GF) est affiché comme rapport de consigne.

5. Procédé selon l'une quelconque des revendications précédentes, **caractérisé en ce que,** lorsque le véhicule change à nouveau du régime de décélération à un régime de traction, il est commuté du rapport de marche avant supérieur sans roue libre (2G) au rapport de marche avant inférieur en roue libre (1GF).

6. Procédé selon l'une quelconque des revendications précédentes, **caractérisé en ce que,** lorsque le véhicule fonctionne en régime de moteur à combustion interne, lorsque le fonctionnement générateur du moteur électrique (EM) ajuste un couple de décélération par l'intermédiaire du rapport de marche avant supérieur sans roue libre (2G) pour la récupération d'énergie, le moteur à combustion interne (VKM) est de nouveau accouplé par fermeture de l'embrayage (K0) lors du changement du véhicule du régime de décélération au régime de traction

7. Procédé selon l'une quelconque des revendications 1 à 6 précédentes, **caractérisé en ce que** la boîte de vitesses (G) est une boîte de vitesses à double embrayage réalisée sous la forme d'une boîte de vitesses manuelle automatisée, les changements de rapport pouvant notamment être actionnés et/ou réalisés manuellement par le conducteur du véhicule par un mode de toucher.

8. Procédé selon la revendication 7, **caractérisé en ce que** lorsque le rapport de marche avant inférieur en roue libre (1GF) est sélectionné et/ou commuté, le rapport de marche avant supérieur sans roue libre (2G) est préengagé en plus du rapport de marche avant inférieur en roue libre (1GF).
